(19) Europäisches Patentamt / European Patent Office / Office européen des brevets

(11) **EP 2 766 554 B1**

(12) **EUROPEAN PATENT SPECIFICATION**

(45) Date of publication and mention
of the grant of the patent:
**24.03.2021 Bulletin 2021/12**

(21) Application number: **12840811.9**

(22) Date of filing: **12.10.2012**

(51) Int Cl.:
*B22F 3/14* (2006.01)      *B24D 99/00* (2010.01)
*B82Y 30/00* (2011.01)    *C04B 35/52* (2006.01)
*C04B 35/56* (2006.01)     *C04B 35/565* (2006.01)
*C04B 35/5831* (2006.01)   *C04B 35/584* (2006.01)
*C04B 35/63* (2006.01)     *C04B 35/645* (2006.01)
*C22C 26/00* (2006.01)     *B22F 5/00* (2006.01)
*E21B 10/567* (2006.01)    *B01J 3/06* (2006.01)

(86) International application number:
**PCT/US2012/059953**

(87) International publication number:
**WO 2013/056047 (18.04.2013 Gazette 2013/16)**

(54) **POLYCRYSTALLINE COMPACTS INCLUDING GRAINS OF HARD MATERIAL, EARTH BORING TOOLS INCLUDING SUCH COMPACTS, AND METHODS OF FORMING SUCH COMPACTS AND TOOLS**

POLYKRISTALLINE PRESSLINGE MIT KÖRNERN AUS EINEM HARTEN MATERIAL, ERDBOHRWERKZEUGE MIT SOLCHEN PRESSLINGEN SOWIE VERFAHREN ZUR FORMUNG SOLCHER PRESSLINGE UND WERKZEUGE

COMPACTS POLYCRISTALLINS COMPRENANT DES GRAINS DE MATIÈRE DURE, OUTILS DE FORAGE DU SOL COMPRENANT DE TELS COMPACTS ET PROCÉDÉS DE FORMATION DE TELS COMPACTS ET DE TELS OUTILS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2011 US 201161547472 P**

(43) Date of publication of application:
**20.08.2014 Bulletin 2014/34**

(73) Proprietor: **Baker Hughes Holdings LLC
Houston, TX 77073 (US)**

(72) Inventors:
• **SCOTT, Dan E.
Mongomery, TX 77356 (US)**
• **DIGIOVANNI, Anthony A.
Houston, TX 77064 (US)**

• **AGRAVAL, Gaurav
Houston,
Texas 77267 (US)**
• **CHAKRABORTY, Soma
Houston, TX 77064 (US)**

(74) Representative: **BRP Renaud & Partner mbB
Rechtsanwälte Patentanwälte
Steuerberater
Königstraße 28
70173 Stuttgart (DE)**

(56) References cited:
**WO-A2-2008/012781      WO-A2-2010/092540
US-A1- 2008 017 421     US-A1- 2008 023 231
US-A1- 2011 061 942     US-B1- 7 806 206**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present disclosure relates generally to polycrystalline compacts, to tools including such compacts, and to methods of forming such polycrystalline compacts and tools.

### BACKGROUND

Earth-boring tools for forming boreholes in subterranean earth formations, such as for hydrocarbon production, carbon dioxide sequestration, *etc.,* generally include a plurality of cutting elements secured to a body. For example, fixed-cutter earth-boring rotary drill bits (also referred to as "drag bits") include cutting elements fixed to a bit body of the drill bit. Similarly, roller cone earth-boring rotary drill bits may include cones mounted on bearing pins extending from legs of a bit body such that each cone is capable of rotating about the bearing pin on which it is mounted. A plurality of cutting elements may be mounted to each cone of the drill bit.

The cutting elements used in such earth-boring tools often include polycrystalline diamond compact (often referred to as "PDC") cutting elements, which are cutting elements that include cutting faces of a polycrystalline diamond (PCD) material. Polycrystalline diamond material is material that includes inter-bonded grains or crystals of diamond material. In other words, polycrystalline diamond material includes direct, inter-granular bonds between the grains or crystals of diamond material. The terms "grain" and "crystal" are used synonymously and interchangeably herein.

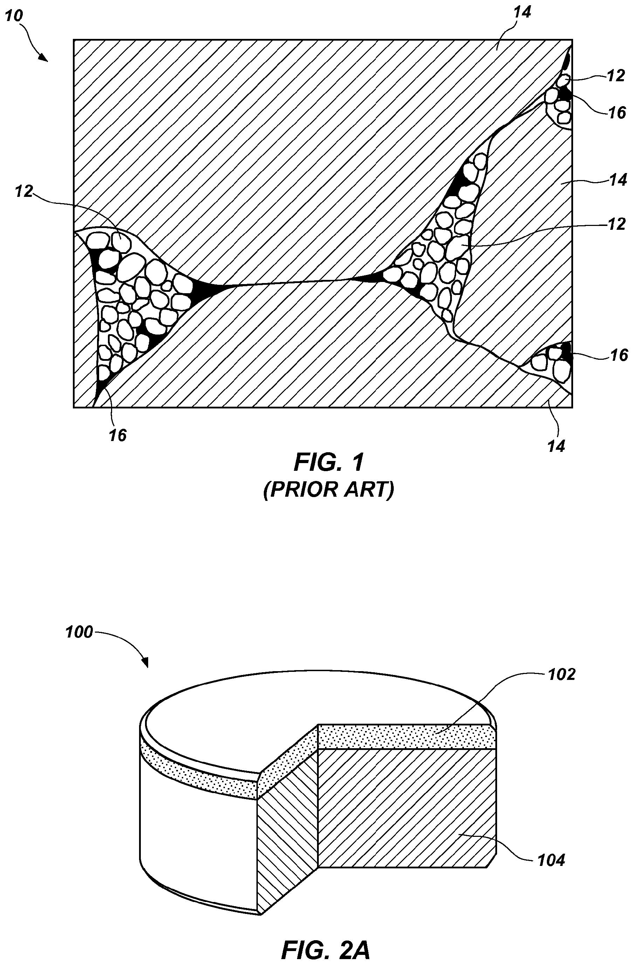

PDC cutting elements are formed by sintering and bonding diamond grains together under conditions of high pressure and temperature in the presence of a catalyst (*e.g.*, cobalt, iron, nickel, or alloys and mixtures thereof) to form a layer or "table" of polycrystalline diamond material on a cutting element substrate. These processes are often referred to as high pressure/high temperature (or "HPHT") processes. As shown in FIG. 1, a polycrystalline diamond table 10 may include fine diamond grains 12, coarse diamond grains 14, and catalyst material 16. The fine diamond grains 12 and coarse diamond grains 14 may be interspersed and inter-bonded. The cutting element substrate may comprise a cermet material (*i.e.*, a ceramic-metal composite material) such as cobalt-cemented tungsten carbide. In such instances, the cobalt or other catalyst material in the cutting element substrate may be swept into the diamond grains during sintering and serve as the catalyst material 16 for forming the inter-granular diamond-to-diamond bonds between, and the resulting diamond table from, the diamond grains 12, 14. In other methods, powdered catalyst material 16 may be mixed with the diamond grains 12, 14 prior to sintering the grains together in an HPHT process.

Upon formation of a diamond table using an HPHT process, catalyst material 16 may remain in interstitial spaces between the grains of diamond 12, 14 in the resulting polycrystalline diamond table 10. The presence of the catalyst material 16 in the diamond table 10 may contribute to thermal damage in the diamond table 10 when the cutting element is heated due to friction at the contact point between the cutting element and the formation during use.

PDC cutting elements in which the catalyst material 16 remains in the diamond table 10 are generally thermally stable up to a temperature of about 750°C. although internal stress within the cutting element may begin to develop at temperatures exceeding about 400°C due to phase changes in the metal catalyst (*e.g.*, cobalt, which undergoes a transition from the beta phase to the alpha phase) and/or differences in the thermal expansion of the diamond grains 12, 14 and the catalyst material 16 at the grain boundaries. This difference in thermal expansion may result in relatively large tensile stresses at the interface between the diamond grains 12, 14, and may contribute to thermal degradation of the microstructure when PDC cutting elements are used in service. Differences in the thermal expansion between the diamond table 10 and the cutting element substrate to which it is bonded further exacerbate the stresses in the PDC. This differential in thermal expansion may result in relatively large compressive and/or tensile stresses at the interface between the diamond table 10 and the substrate that eventually lead to the deterioration of the diamond table 10, cause the diamond table to delaminate from the substrate, or result in the general ineffectiveness of the cutting element.

Furthermore, at temperatures at or above about 750°C, some of the diamond crystals 12, 14 within the diamond table may react with the catalyst material 16, causing the diamond crystals 12, 14 to undergo a chemical breakdown or conversion to another allotrope of carbon. For example, the diamond crystals 12, 14 may graphitize at the diamond crystal boundaries, which may substantially weaken the diamond table 10. At extremely high temperatures, some of the diamond crystals 12, 14 may be converted to carbon monoxide and/or carbon dioxide.

In order to reduce the problems associated with differences in thermal expansion and chemical breakdown of the diamond crystals in PDC elements, so-called "thermally stable" polycrystalline diamond compacts (which are also known as thermally stable products, or "TSPs") have been developed. A TSP may be formed by leaching the catalyst material (*e.g.*, cobalt) out from interstitial spaces between the inter-bonded diamond crystals in the diamond table using, for example, an acid or combination of acids (*e.g., aqua regia*). A substantial amount of the catalyst material may be removed from the diamond table, or catalyst material may be removed from only a portion thereof. TSPs in which substantially all catalyst material has been leached out from the diamond table have been reported to be thermally stable up to temperatures of about 1,200°C. It has also been reported, however, that such fully leached diamond tables are relatively more brittle and vulnerable to shear, compressive, and tensile stresses than are non-leached diamond tables. In addition, it is difficult to secure a completely leached diamond table to a supporting substrate. In an effort to provide cutting elements having diamond tables that are more thermally stable relative to non-leached diamond tables, but that are also relatively less brittle and vulnerable to shear, compressive, and tensile stresses relative to fully leached diamond tables, cutting elements have been provided that include a diamond table in which the catalyst material has been leached from a portion or portions of the diamond table. For example, it is known to leach catalyst material from the cutting face, from the side of the diamond table, or both, to a desired depth within the diamond table, but without leaching all of the catalyst material out from the diamond table.

WO 2008/012781 discloses ultrahard polycrystalline abrasive compacts made under high pressure/high temperature conditions, including coarser and finer grained particles. WO 2010/092540 discloses polycrystalline diamond comprising diamond in granular form.

DISCLOSURE

The present invention provides a polycrystalline compact as claimed in claim 1. The present invention also provides an earth-boring tool as claimed in claim 8. The present invention further comprises a method of forming a polycrystalline compact as claimed in claim 9.

The present invention is defined by the independent claims. Advantageous embodiments are described in dependent claims.

BRIEF DESCRIPTION OF THE DRAWINGS

While the specification concludes with claims particularly pointing out and distinctly claiming what are regarded as embodiments of the present disclosure, various features and advantages of this disclosure may be more readily ascertained from the description of example embodiments set forth below, when read in conjunction with the accompanying drawings, in which:

FIG. 1 is a simplified drawing showing how a conventional polycrystalline material may appear under magnification, and illustrates inter-bonded grains of hard material;
FIG. 2A illustrates an embodiment of a polycrystalline compact of the current disclosure;
FIG. 2B is an enlarged and simplified drawing illustrating how polycrystalline material of the polycrystalline compact of FIG. 2A may appear under magnification, and illustrates inter-bonded grains of hard material;
FIG. 2C is another enlarged and simplified drawing showing how polycrystalline material of the polycrystalline compact of FIG. 2A may appear under further magnification;
FIG. 3 is a simplified drawing showing how the polycrystalline material shown in FIG. 2B may appear after removing catalyst material from interstitial spaces, and illustrates inter-bonded grains of hard material; and
FIG. 4 is a perspective view of an embodiment of a fixed-cutter earth-boring rotary drill bit that includes a plurality of polycrystalline compacts like the polycrystalline compact shown in FIGS. 2A through 2C.

MODE(S) FOR CARRYING OUT THE INVENTION

The illustrations presented herein are not actual views of any particular polycrystalline compact, microstructure of polycrystalline material, particles, or drill bit, and are not drawn to scale, but are merely idealized representations employed to describe embodiments of the disclosure. Elements common between figures may retain the same numerical designation.

As used herein, the term "drill bit" means and includes any type of bit or tool used for drilling during the formation or enlargement of a wellbore and includes, for example, rotary drill bits, percussion bits, core bits, eccentric bits, bicenter bits, reamers, expandable reamers, mills, drag bits, roller cone bits, hybrid bits, and other drilling bits and tools known in the art.

The term "polycrystalline material" means and includes any material comprising a plurality of grains (*i.e.*, crystals) of the material that are bonded directly together by inter-granular bonds. The crystal structures of the individual grains of the material may be randomly oriented in space within the polycrystalline material.

As used herein, the term "inter-granular bond" means and includes any direct atomic bond (*e.g.*, ionic, covalent, metallic, *etc.*) between atoms in adjacent grains of material.

As used herein, the phrase *"in situ* nucleated grains" means and includes grains that are nucleated and grown in place within a polycrystalline material as the polycrystalline material is formed.

As used herein, the term "grain size" means and includes a geometric mean diameter measured from a 2D section through a bulk material. The geometric mean diameter for a group of particles may be determined using techniques known in the art, such as those set forth in Ervin E. Underwood, Quantitative Stereology, 103-105 (Addison-Wesley Publishing Company, Inc. 1970).

FIG. 2A is a simplified drawing illustrating an embodiment of a polycrystalline compact 100 of the present disclosure. The polycrystalline compact 100 includes a table or layer of hard polycrystalline material 102 that has been provided on (*e.g.,* formed on or secured to) a surface of a supporting substrate 104. For example, the substrate 104 may include a generally cylindrical body of cobalt-cemented tungsten carbide material, although substrates of different geometries and compositions also may be employed. In additional embodiments, the polycrystalline compact 100 may simply comprise a volume of the hard polycrystalline material 102 having any desirable shape, and may not include any supporting substrate 104.

In some embodiments, the hard polycrystalline material 102 comprises polycrystalline diamond. In other embodiments, the hard polycrystalline material 102 may comprise another hard material, such as cubic boron nitride, silicon nitride, silicon carbide, titanium carbide, tungsten carbide, tantalum carbide, or another hard material. The hard polycrystalline material comprises a superabrasive material.

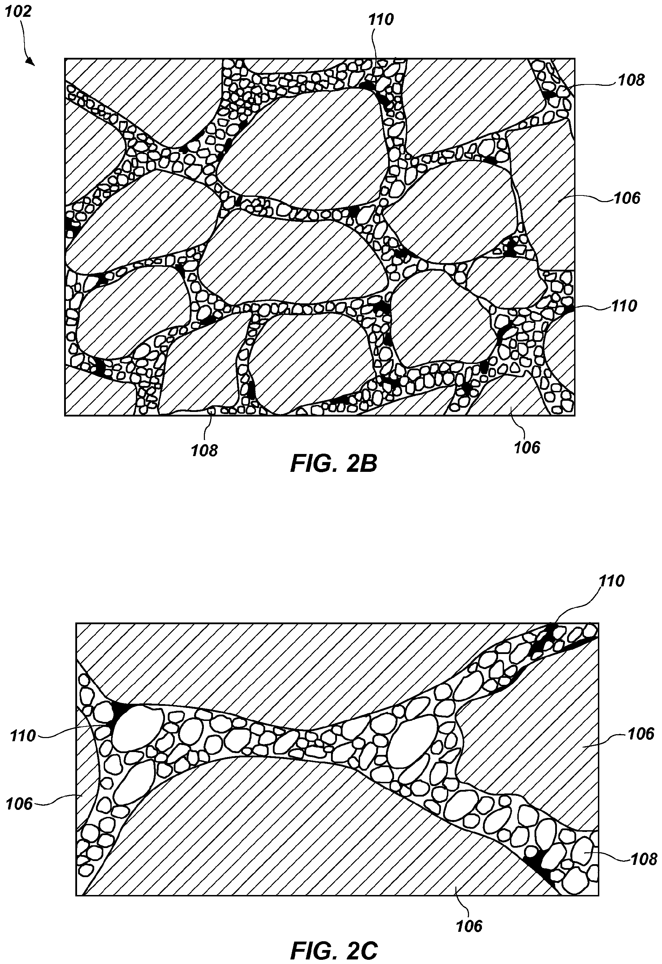

FIG. 2B is an enlarged and simplified drawing schematically illustrating how a microstructure of the hard polycrystalline material 102 of the compact 100 (FIG. 2A) may appear under magnification. As shown in FIG. 2B, the grains of the hard polycrystalline material 102 have a multi-modal (e.g., bi-modal, tri-modal, etc.) grain size distribution. In other words, the hard polycrystalline material 102 includes a first plurality of grains 106 of hard material (e.g., a superabrasive material) having a first average grain size, and at least a second plurality of grains 108 of hard material (e.g., a superabrasive material) having a second average grain size that differs from the first average grain size of the first plurality of grains 106, such that a plot of the number of particles as a function of particle size has at least two peaks.

The first plurality of grains 106 is relatively larger than the second plurality of grains 108.

The second plurality of grains 108 are smaller than the first plurality of grains 106. While FIG. 2B illustrates the plurality of grains 108 as being smaller, on average, than the first plurality of grains 106, the drawing is not drawn to scale and has been simplified for purposes of illustration. The difference between the average sizes of the first plurality of grains 106 and the second plurality of grains 108 is greater than the difference in the average grain sizes illustrated in FIG. 2B. The average grain size of the larger grains 106 is at least fifty (50) times greater than the average grain size of the smaller grains 108. In some embodiments, the average grain size of the larger grains 106 may be between fifty (50) times and three hundred times (300) greater than the average grain size of the smaller grains 108. The larger grains 106 and the smaller grains 108 may be interspersed and inter-bonded to form the hard polycrystalline material 102. In other words, in embodiments in which the hard polycrystalline material 102 comprises polycrystalline diamond, the larger grains 106 and the smaller grains 108 may be dispersed among and bonded directly to one another by inter-granular diamond-to-diamond bonds.

As known in the art, the average grain size of grains within a microstructure may be determined by measuring grains of the microstructure under magnification. For example, a scanning electron microscope (SEM), a field emission scanning electron microscope (FESEM), or a transmission electron microscope (TEM) may be used to view or image a surface of a hard polycrystalline material 102 (e.g., a polished and etched surface of the hard polycrystalline material 102). Commercially available vision systems or image analysis software are often used with such microscopy tools, and these vision systems are capable of measuring the average grain size of grains within a microstructure.

At least some of the smaller grains 108 of the hard polycrystalline material 102 may comprise in situ nucleated grains, as described in U.S. Patent Application Publication No. 2011/0031034 A1, published February 10, 2011, and entitled "Polycrystalline Compacts Including In-Situ Nucleated Grains, Earth-Boring Tools Including Such Compacts, and Methods of Forming Such Compacts and Tools."

The average grain size of the smaller grains 108 is between five nanometers (5 nm) and one microns (1 $\mu$m) (e.g., between 50 nm and 1 $\mu$m), and the average grain size of the larger grains 106 is between 5 $\mu$m and 40 $\mu$m (e.g., between 10 $\mu$m and 15 $\mu$m). Thus, the smaller grains 108 may include nanoparticles in the microstructure of the hard polycrystalline material 102. Grains of various sizes may be used to form polycrystalline materials 102 of the present disclosure.

A large difference in the average grain size between the larger grains 106 and the smaller grains 108 may result in smaller interstitial spaces or voids within the microstructure of the hard polycrystalline material 102 (relative to conventional polycrystalline materials), and the total volume of the interstitial spaces or voids may be more evenly distributed throughout the microstructure of the hard polycrystalline material 102. As a result, any material present within the interstitial spaces (e.g., a catalyst material as described below) may also be more evenly distributed throughout the microstructure of the hard polycrystalline material 102 within the relatively smaller interstitial spaces therein.

In some embodiments, the number of smaller grains 108 per unit volume of the hard polycrystalline material 102 may be higher than the number of larger grains 106 per unit volume of the hard polycrystalline material 102, such as 10 times higher, 100 times higher, or even 1000 times higher than the number of larger grains 106 per unit volume of the hard polycrystalline material 102.

The smaller grains 108 may occupy between two percent (2%) and thirty percent (30%) of the volume of the hard polycrystalline material 102. More specifically, the smaller grains 108 may occupy between 5% and 5% of the volume of the hard polycrystalline material 102. The remainder of the volume of the hard polycrystalline material 102 may be substantially composed of the larger grains 106. A relatively small percentage of the remainder of the volume of the hard polycrystalline material 102 (e.g., less than ten percent (10%), less than five percent (5%), less than two percent (2%), or less than one percent (1%)) may include interstitial spaces between the smaller grains 108 and larger grains 106, which spaces may be at least partially filled with a catalyst or other material, as described below.

The larger grains 106 may be substantially or predominantly surrounded or coated by smaller grains 108. In some embodiments, the larger grains 106 may be bonded primarily or solely to smaller grains 108 by diamond-to-diamond bonds. The larger grains 106 are non-contiguous and are distributed in a contiguous matrix of the smaller grains 108. That is, the hard polycrystalline material 102 may be substantially free of diamond-to-diamond bonding directly between larger grains 106. The contiguity C of the distribution of the larger grains 106 may be defined as a ratio of the number of larger grains 106 having inter-granular bonds to other larger grains 106 along a plane to the total number of larger grains 106 along that plane:

$$C = n_b / n_{tot},$$

where $n_b$ equals the number of larger grains 106 bonded directly to other larger grains 106 along the plane, and $n_{tot}$ equals the total number of larger grains 106 along the plane. To determine this ratio, a hard polycrystalline material 102 may be cut along a plane. The number of larger grains 106 bonded directly to or in contact with another larger grain 106 ($n_b$) may be counted. The number of larger grains 106 within a particular area along the plane ($n_{tot}$) may also be counted. The ratio of these two numbers is a measure of the contiguity of the larger grains 106. A high contiguity (e.g., about 1.0) indicates that a high fraction of the larger grains 106 are bonded directly to other larger grains 106. For example, in the polycrystalline diamond table 10 shown in FIG. 1, the coarse diamond grains 14 have a contiguity of 1.0, because all the coarse diamond grains 14 are bonded directly to other coarse diamond grains 14. In embodiments of the present disclosure, such as shown in FIGS. 2B and 2C, the contiguity of the larger grains 106 may be less than about 0.9, less than about 0.6, less than about 0.3, less than about 0.2, less than about 0.1, less than about 0.05, or even less than about 0.01. That is, less than about 90%, less than about 60%, less than about 30%, less than about 20%, less than about 10%, less than about 5%, or even less than about 1% of the larger grains 106 may be in direct physical contact with other larger grains 106.

Smaller grains 108 may be disposed within spaces between adjacent larger grains 106. The smaller grains 108 form a continuous network or matrix surrounding the larger grains 106. As shown in FIG. 2C, individual larger grains 106 do not touch other larger grains 106 at all (i.e., the larger grains 106 has a contiguity of about zero). Instead, the larger grains 106 may touch a plurality of smaller grains 108, which smaller grains 108 may touch other larger grains 106 and/or smaller grains 108.

In contrast, in the polycrystalline diamond table 10 shown in FIG. 1, the coarse diamond grains 14 abut and are bonded directly to one another.

The low contiguity of the larger grains 106 of the present disclosure may limit the initiation and/or propagation of cracks within the hard polycrystalline material 102, in comparison with conventional polycrystalline materials. The presence of smaller grains also influences locally the amount of metal binder in unleached regions of the diamond table, and the metal binder content can be a toughening agent to crack propagation. The proportion of localized binder content on the grain-scale can be higher in these small grain regions than for a similarly sized microstructure having of larger grains.

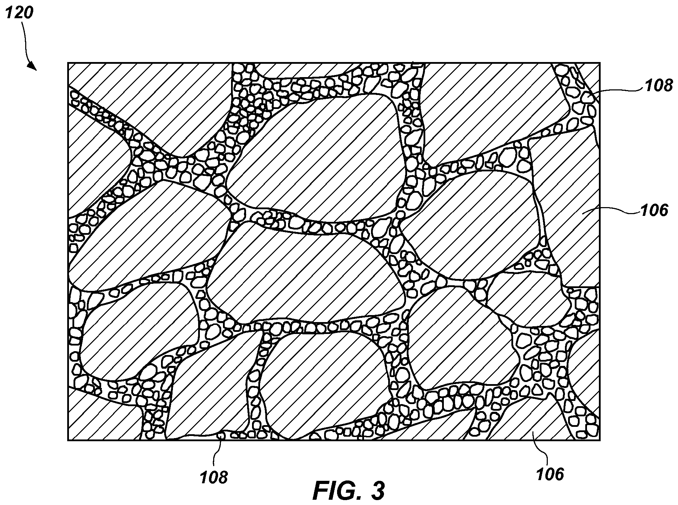

In some embodiments, the hard polycrystalline material 102 may include a catalyst material 110 (shaded black in FIGS. 2B and 2C) disposed in some interstitial spaces between the larger grains 106 and the smaller grains 108. The catalyst material 110 may comprise a catalyst material capable of forming (and used to catalyze the formation of) inter-granular bonds between the larger grains 106 and the smaller grains 108 of the hard polycrystalline material 102. In other embodiments, however, the interstitial spaces between the larger grains 106 and the smaller grains 108 in some regions of the hard polycrystalline material 102, or throughout the entire volume of the hard polycrystalline material 102, may be at least substantially free of such a catalyst material, as described below and shown in FIG. 3. In such embodiments, the interstitial spaces may comprise voids filled with gas (e.g., air), or the interstitial spaces may be filled with another material that is not a catalyst material or that will not contribute to degradation of the polycrystalline material 102 when the compact 100 is used in a drilling operation.

In embodiments in which the polycrystalline material 102 comprises polycrystalline diamond, the catalyst material 110 may comprise a Group VIII-A element (e.g., iron, cobalt, or nickel) or an alloy thereof, and the catalyst material 110 may comprise between about 0.1% and about 20% by volume of the hard polycrystalline material 102. In additional embodiments, the catalyst material 110 may comprise a carbonate material, such as a carbonate of one or more of Mg, Ca, Sr, and Ba. Carbonates may also be used to catalyze the formation of polycrystalline diamond.

The hard polycrystalline material 102 of the polycrystalline compact 100 may be formed using an HPHT process. In some embodiments, the hard polycrystalline material 102 may be formed on a supporting substrate 104 (as shown in FIG. 2A) of cemented tungsten carbide or another suitable substrate material in a conventional HPHT process of the type described, by way of non-limiting example, in U.S. Patent 3,745,623, issued July 17, 1973, entitled "Diamond Tools for Machining," or may be formed as a freestanding polycrystalline compact (i.e., without the supporting substrate 104) in a similar conventional HPHT process as described, by way of non-limiting example, in U.S. Patent 5,127,923, issued July 7, 1992, entitled "Composite Abrasive Compact Having High Thermal Stability." In some embodiments, the catalyst material 110 may be supplied from the supporting substrate 104 during an HPHT process used to form the hard polycrystalline material 102. For example, the substrate 104 may be a cobalt-cemented tungsten carbide material. Cobalt of the cobalt-cemented tungsten carbide may serve as the catalyst material 110 during the HPHT process.

To form the hard polycrystalline material 102 in an HPHT process, a particulate mixture including grains of hard material, and optionally including nucleation particles (as described in U.S. Patent Application Publication No. 2001/0031034 A1) may be subjected to elevated temperatures (e.g., temperatures greater than about 1,300°C) and elevated pressures (e.g., pressures greater than about 5.0 gigapascals (GPa)) to form inter-granular bonds between the grains, thereby forming the hard polycrystalline material 102. In some embodiments, the particulate mixture may be subjected to a pressure greater than about six gigapascals (6.0 GPa) and a temperature greater than about 1,500°C in the HPHT process.

The particulate mixture is be formed by coating the larger grains 106 with the smaller grains 108. Smaller grains 108 may be coated onto the larger grains 106 by a variety of means including but not limited to layer-by-layer processes, fluidized-bed reactions, electrospraying, sol-gel coating, or similar methods as known in the art. For example, the coating of larger grains 106 with smaller grains 108 may be performed as described in N. Ellis, et al., "Development of a Continuous Nanoparticle Coating with Electrospraying," 2010 ECI Conference on the 13th Intl. Conference on Fluidization, paper 46, 2011, available at http://services.bepress.com/eci/fluidization_xiii/46/. In some embodiments, the larger grains 106 may be rolled or blended with the smaller grains 108 and a binder material. The binder material may promote adhesion of the grains 106, 108, such that larger grains 106 become coated with the smaller grains 108. The binder material may include an organic material, such as a material that binds to the larger grains 106 and the smaller grains 108 and decomposes at temperatures well below HPHT processing temperatures (e.g., below about 500°C, below about 300°C, or even below about 200°C). Examples of organic binders include polyethylene, polyethylene-butyl acetate (PEBA), ethylene vinyl acetate (EVA), ethylene ethyl acetate, polyethylene glycol (PEG), polypropylene (PP), poly vinyl alcohol (PVA), polystyrene (PS), polymethyl methacrylate, polyethylene carbonate (PEC), polyalkylene carbonate (PAC), polycarbonate, poly propylene carbonate (PPC), nylons, polyvinyl chlorides, polybutenes, polyesters, etc. In other embodiments, the binder material can include, for example, aqueous and gelation polymers or inorganic polymers. Suitable aqueous and gelation polymers may include those formed from cellulose, alginates, polyvinyl alcohol, polyethylene glycol, polysaccharides, water, and mixtures thereof. Silicone is an example of an inorganic polymer binder. Other binder materials may include wax or natural and synthetic oil (e.g., mineral oil) and mixtures thereof. It is contemplated that one of ordinary skill in the art may find other binder materials useful for promoting adhesion of the grains 106, 108.

Either the larger grains 106, the smaller grains 108, or both, may be selected to include diamond. The mixture may optionally be combined with a catalyst material, such as cobalt, iron, nickel, or combinations thereof. The mixture may then be formed into a green (i.e., unsintered) structure. The green structure may be sintered or partially sintered, such as in an HPHT process. In some embodiments, the mixture may be subjected to a pressure greater than about 5.0 GPa and a temperature greater than about 1,000°C to form a polycrystalline compact (e.g., a pressure greater than about 6.5 GPa and a temperature greater than about 1,500°C). A continuous network of the smaller grains 108 may be formed during sintering by catalyzing the formation of inter-granular bonds (e.g., diamond-to-diamond bonds) between adjacent smaller grains 1 08. The presence of the catalyst may promote the formation of inter-granular bonds. The catalyst may be removed from the polycrystalline compact after sintering (and thus, after the formation of inter-granular bonds), such as by immersing the polycrystalline compact in a leaching agent.

The time at the elevated temperatures and pressures may be kept relatively short, when compared to conventional HPHT processes, to prevent growth of the larger grains 106 and shrinkage (i.e., dissolution) of the smaller grains 108. For example, the particulate mixture may be subjected to a pressure greater than 6.5 GPa and a temperature greater than about 1,500°C for less than about two minutes (2.0 min.) during the HPHT process.

In embodiments in which a catalyst material 110 includes a carbonate (e.g., a carbonate of one or more of Mg, Ca, Sr, and Ba) to catalyze the formation of polycrystalline diamond, the particulate mixture may be subjected to a pressure greater than about 7.7 GPa and a temperature greater than about 2,000°C. The particulate mixture may include the larger grains 106 previously described herein. The particulate mixture may also include catalyst material 110. In some embodiments, the particulate material may include a powder-like substance. In other embodiments, however, the particulate material may be carried by (e.g., on or in) another material, such as a paper or film, which may be subjected to the HPHT process.

In some embodiments, parameters of the HPHT process (e.g., temperature, pressure, time, etc.) may be selectively controlled to form in situ nucleated smaller grains 108 of hard material within the resulting hard polycrystalline material 102. Thus, some of the smaller grains 108 of hard material may be nucleated and catalyzed in the presence of the larger grains 106 of hard material, and the formation of inter-granular bonds between the larger grains 106 and the smaller grains 108 of hard material may be catalyzed.

As previously described, catalyst material may promote the formation of the inter-granular bonds between smaller grains 108 and the larger grains 106 during the HPHT process. After the HPHT process, some catalyst material 110 may remain in the interstitial spaces between the inter-bonded smaller grains 108 and larger grains 106.

Optionally, catalyst material 110 may be removed from the hard polycrystalline material 102 after the HPHT process, as known in the art, to form a leached polycrystalline material 120 (FIG. 3). For example, a leaching process may be used to remove catalyst material 110 from interstitial spaces between the inter-bonded grains of the hard polycrystalline material 102. By way of example and not limitation, the hard polycrystalline material 102 may be leached using a leaching agent and process such as those described in, for example, U.S. Patent No. 5,127,923, and U.S. Patent No. 4,224,380, issued September 23, 1980, and entitled "Temperature Resistant Abrasive Compact and Method for Making Same." Specifically, *aqua regia* (a mixture of concentrated nitric acid ($HNO_3$) and concentrated hydrochloric acid (HCl)) may be used to at least substantially remove catalyst material from the interstitial spaces between inter-bonded grains in the hard polycrystalline material 102. Boiling hydrochloric acid (HCl) or boiling hydrofluoric acid (HF) may also be used as leaching agents. One suitable leaching agent is hydrochloric acid (HCl) at a temperature above 110°C, which may be provided in contact with the hard polycrystalline material 102 for a period of about two (2) hours to about sixty (60) hours, depending upon the size of the body comprising the hard polycrystalline material 102. After leaching the hard polycrystalline material 102, interstitial spaces between the inter-bonded grains within the leached polycrystalline material 120 may be at least substantially free of catalyst material 110 used to catalyze formation of inter-granular bonds between the grains.

The overall polycrystalline microstructure that may be achieved in accordance with embodiments of the present disclosure may result in polycrystalline diamond compacts that exhibit improved durability and thermal stability, such as a decreased propensity for crack propagation.

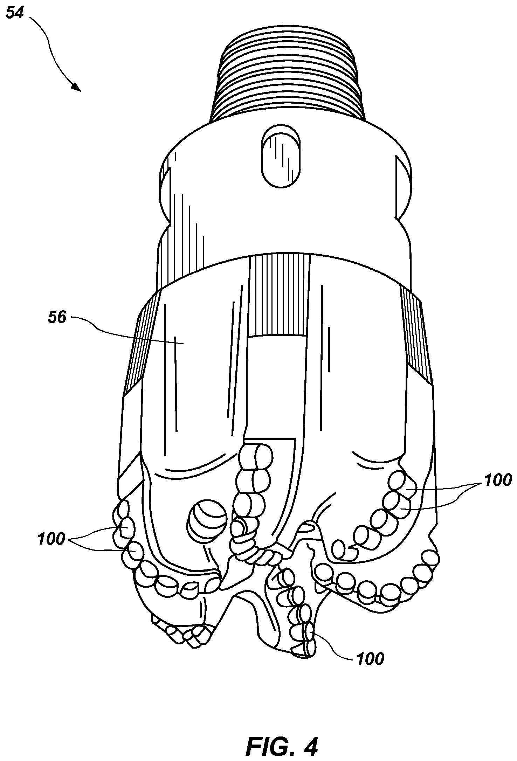

Polycrystalline compacts that embody teachings of the present disclosure, such as the polycrystalline compact 100 illustrated in FIGS. 2A through 2C, and the leached polycrystalline material 120 illustrated in FIG. 3, may be formed and secured to drill bits for use in forming wellbores in subterranean formations. As a non-limiting example, FIG. 4 illustrates a fixed cutter type earth-boring rotary drill bit 54 that includes a plurality of polycrystalline compacts 100 as previously described herein. The earth-boring rotary drill bit 54 includes a bit body 56, and the polycrystalline compacts 100, which serve as cutting elements, are mounted on the bit body 56 of the drill bit 54. The polycrystalline compacts 100 may be brazed or otherwise secured within pockets formed in the outer surface of the bit body 56. Other types of earth-boring tools, such as roller cone bits, percussion bits, hybrid bits, reamers, *etc.,* also may include cutting elements 100 as described herein.

**Claims**

1. A polycrystalline compact (100), comprising:
   a polycrystalline superabrasive material (102) comprising:

   a first plurality of grains (106) of superabrasive material (102) having a first average grain size between 5 μm and 40 μm; and
   a second plurality of grains (108) of superabrasive material (102) having a second average grain size between 5 nm and 1 μm and smaller than the first average grain size;
   wherein the first plurality of grains (106) is non-contiguous and is dispersed within a substantially continuous matrix of the second plurality of grains (108); wherein the second average grain size is at leas fifty times smaller than the first average grain size.

2. The polycrystalline compact (100) of claim 1, wherein each of the first plurality of grains is at least substantially surrounded by grains of the second plurality of grains.

3. The polycrystalline compact of claim 1, wherein 20% or less of the first plurality of grains (106) are in direct physical contact with others of the first plurality of grains (106), preferably wherein 10% or less of the first plurality of grains (106) are in direct physical contact with others of the first plurality of grains (106).

4. The polycrystalline compact (100) of claim 1, wherein the first plurality of grains (106) of superabrasive material (102) and the second plurality of grains (108) of superabrasive material (102) comprise the same superabrasive material (102).

5. The polycrystalline compact (100) of claim 1, wherein the second plurality of grains (108) comprise between 2% and 30% by volume of the polycrystalline superabrasive material (102), preferably wherein the second plurality of grains (108) comprise between 5% and 15% by volume of the polycrystalline superabrasive material (102).

6. The polycrystalline compact (100) of claim 1, further comprising a catalyst material (110) disposed in at least some interstitial spaces between the first plurality of grains (106) of superabrasive material (102) and the second plurality of grains (108) of superabrasive material (102); and/or wherein the polycrystalline superabrasive material (102) comprises polycrystalline diamond.

7. The polycrystalline compact (100) of claim 1, wherein the first plurality and the second plurality of grains (106, 108) of superabrasive material (102) each comprise a material selected from the group consisting of diamond and cubic boron nitride, and wherein the first plurality and the second plurality of grains (106, 108) each comprise the same superabrasive material (102).

8. An earth-boring tool (54), comprising:

a body (56); and
at least one polycrystalline compact (100) attached to the body (56), the at least one polycrystalline compact (100) comprising:
a polycrystalline superabrasive material (102) comprising:

a first plurality of grains (106) of superabrasive material (102) having a first average grain size between 5 μm and 40 μm; and
a second plurality of grains (108) of superabrasive material (102) having a second average grain size between 5 nm and 1 μm and smaller than the first average grain size; wherein the first plurality of grains (106) is non-contiguous and is dispersed within a substantially continuous matrix of the second plurality of grains (108); wherein the second average grain size is at least fifty times smaller than the first average grain size.

9. A method of forming a polycrystalline compact (100) according to claim 1, comprising:

coating relatively larger grains (106) of superabrasive material (102) with relatively smaller grains (108) of superabrasive material (102) wherein the relatively larger grains (106) have a first average grain size of between 5 μm and 40 μm, and the relatively smaller grains (108) have a second average grain size of between 5 nm and 1 μm;
forming a green structure comprising the relatively larger grains (106) coated with the relatively smaller grains (108); and
sintering the green structure, and wherein the second average size is at least fifty times smaller than the first average grain size.

10. The method of claim 9, further comprising selecting the superabrasive material (102) of each of the relatively larger grains (106) and the relatively smaller grains (108) to comprise diamond and/or further comprising mixing a catalyst material (110) comprising at least one of cobalt, iron, and nickel with the relatively larger grains (106).

11. The method of claim 9, wherein coating relatively larger grains (106) of superabrasive material (102) with relatively smaller grains (108) of superabrasive material (102) comprises electrospraying the relatively smaller grains (108) of superabrasive material (102) over the relatively larger grains (106) of superabrasive material (108) and/or further comprising selecting each of the relatively larger grains (106) of hard material (102) and the relatively smaller grains (108) of hard material (102) to comprise a material selected from the group consisting of diamond, cubic boron nitride, silicon nitride, silicon carbide, titanium carbide, tungsten carbide, and tantalum carbide.

**Patentansprüche**

1. Polykristalliner Pressling (100), umfassend:
polykristallines Superschleifmaterial (102), umfassend:

eine erste Vielzahl von Körnern (106) aus Superschleifmaterial (102) mit einer ersten durchschnittlichen Korngröße zwischen 5 μm und 40 μm; und
eine zweite Vielzahl von Körnern (108) aus Superschleifmaterial (102) mit einer zweiten durchschnittlichen Korngröße zwischen 5 nm und 1 μm und kleiner als die erste durchschnittliche Korngröße;
wobei die erste Vielzahl von Körnern (106) nicht zusammenhängend ist und innerhalb einer im Wesentlichen kontinuierlichen Matrix der zweiten Vielzahl von Körnern (108) dispergiert ist;
wobei die zweite durchschnittliche Korngröße mindestens fünfzig Mal kleiner als die erste durchschnittliche Korngröße ist.

2. Polykristalliner Pressling (100) nach Anspruch 1, wobei jedes der ersten Vielzahl von Körnern mindestens im Wesentlichen von Körnern der zweiten Vielzahl von Körnern umgeben ist.

3. Polykristalliner Pressling nach Anspruch 1, wobei 20 % oder weniger der ersten Vielzahl von Körnern (106) in direktem physischem Kontakt mit anderen der ersten Vielzahl von Körnern (106) stehen, wobei vorzugsweise 10% oder weniger der ersten Vielzahl von Körnern (106) in direktem physischem Kontakt mit anderen der ersten Vielzahl von Körnern (106) stehen.

**4.** Polykristalliner Pressling (100) nach Anspruch 1, wobei die erste Vielzahl von Körnern (106) aus Superschleifmaterial (102) und die zweite Vielzahl von Körnern (108) aus Superschleifmaterial (102) dasselbe Superschleifmaterial (102) umfassen.

**5.** Polykristalliner Pressling (100) nach Anspruch 1, wobei die zweite Vielzahl von Körnern (108) zwischen 2 Vol.-% und 30 Vol.-% des polykristallinen Superschleifmaterials (102) umfasst, wobei vorzugsweise die zweite Vielzahl von Körnern (108) zwischen 5 Vol.-% und 15 Vol.-% des polykristallinen Superschleifmaterials (102) umfasst.

**6.** Polykristalliner Pressling (100) nach Anspruch 1, ferner umfassend ein Katalysatormaterial (110), das in mindestens einigen Zwischenräumen zwischen der ersten Vielzahl von Körnern (106) aus Superschleifmaterial (102) und der zweiten Vielzahl von Körnern (108) aus Superschleifmaterial (102) angeordnet ist; und/oder wobei das polykristalline Superschleifmaterial (102) polykristallinen Diamant umfasst.

**7.** Polykristalliner Pressling (100) nach Anspruch 1, wobei die erste Vielzahl und die zweite Vielzahl von Körnern (106, 108) aus Superschleifmaterial (102) jeweils ein Material umfassen, das ausgewählt ist aus der Gruppe bestehend aus Diamant und kubischem Bornitrid, und wobei die erste Vielzahl und die zweite Vielzahl von Körnern (106, 108) jeweils dasselbe Superschleifmaterial (102) umfassen.

**8.** Erdbohrwerkzeug (54), umfassend:

einen Körper (56); und
mindestens einen polykristallinen Pressling (100), der an dem Körper (56) befestigt ist, wobei der mindestens eine polykristalline Pressling (100) Folgendes umfasst:
polykristallines Superschleifmaterial (102), umfassend:

eine erste Vielzahl von Körnern (106) aus Superschleifmaterial (102) mit einer ersten durchschnittlichen Korngröße zwischen 5 $\mu$m und 40 $\mu$m; und
eine zweite Vielzahl von Körnern (108) aus Superschleifmaterial (102) mit einer zweiten durchschnittlichen Korngröße zwischen 5 nm und 1 $\mu$m und kleiner als die erste durchschnittliche Korngröße;
wobei die erste Vielzahl von Körnern (106) nicht zusammenhängend ist und innerhalb einer im Wesentlichen kontinuierlichen Matrix der zweiten Vielzahl von Körnern (108) dispergiert ist;
wobei die zweite durchschnittliche Korngröße mindestens fünfzig Mal kleiner als die erste durchschnittliche Korngröße ist.

**9.** Verfahren zum Ausbilden eines polykristallinen Presslings (100) nach Anspruch 1, umfassend:

Beschichten verhältnismäßig größerer Körner (106) aus Superschleifmaterial (102) mit verhältnismäßig kleineren Körnern (108) aus Superschleifmaterial (102), wobei die verhältnismäßig größeren Körner (106) eine erste durchschnittliche Korngröße zwischen 5 $\mu$m und 40 $\mu$m aufweisen und die verhältnismäßig kleineren Körner (108) eine zweite durchschnittliche Korngröße zwischen 5 nm und 1 $\mu$m aufweisen;
Bilden einer Grünstruktur, die die verhältnismäßig größeren Körner (106) umfasst, die mit den verhältnismäßig kleineren Körnern (108) beschichtet sind; und
Sintern der Grünstruktur, und wobei die zweite durchschnittliche Größe mindestens fünfzig Mal kleiner als die erste durchschnittliche Korngröße ist.

**10.** Verfahren nach Anspruch 9, ferner umfassend das Auswählen des Superschleifmaterials (102) von jedem der verhältnismäßig größeren Körner (106) und der verhältnismäßig kleineren Körner (108), um Diamant zu umfassen, und/oder ferner umfassend das Mischen eines Katalysatormaterials (110), das mindestens eines von Kobalt, Eisen und Nickel umfasst, mit den verhältnismäßig größeren Körnern (106).

**11.** Verfahren nach Anspruch 9, wobei das Beschichten verhältnismäßig größerer Körner (106) aus Superschleifmaterial (102) mit verhältnismäßig kleineren Körnern (108) aus Superschleifmaterial (102) das Elektrosprühen der verhältnismäßig kleineren Körner (108) aus Superschleifmaterial (102) über die verhältnismäßig größeren Körner (106) aus Superschleifmaterial (108) umfasst, und/oder ferner umfassend das Auswählen jedes der verhältnismäßig größeren Körner (106) aus hartem Material (102) und der verhältnismäßig kleineren Körner (108) aus hartem Material (102), um ein Material zu umfassen, das ausgewählt ist aus der Gruppe bestehend aus Diamant, kubischem Bornitrid, Siliciumnitrid, Siliciumcarbid, Titancarbid, Wolframcarbid und Tantalcarbid.

## Revendications

**1.** Comprimé polycristallin (100), comprenant :
un matériau superabrasif polycristallin (102) comprenant :

une première pluralité de grains (106) de matériau superabrasif (102) ayant une première taille moyenne de grain entre 5 $\mu$m et 40 $\mu$m ; et une deuxième pluralité de grains (108) de matériau superabrasif (102) ayant une deuxième taille moyenne de grain entre 5 nm et 1 $\mu$m et plus petite que la première taille moyenne de grain ;

dans lequel la première pluralité de grains (106) est non contiguë et est dispersée dans une matrice sensiblement continue de la deuxième pluralité de grains (108) ;

dans lequel la deuxième taille moyenne de grain est au moins cinquante fois plus petite que la première taille moyenne de grain.

2. Comprimé polycristallin (100) selon la revendication 1, dans lequel chacun de la première pluralité de grains est au moins sensiblement entouré par des grains de la deuxième pluralité de grains.

3. Comprimé polycristallin selon la revendication 1, dans lequel 20 % ou moins de la première pluralité de grains (106) sont en contact physique direct avec d'autres de la première pluralité de grains (106), de préférence dans lequel 10 % ou moins de la première pluralité de grains (106) sont en contact physique direct avec d'autres de la première pluralité de grains (106).

4. Comprimé polycristallin (100) selon la revendication 1, dans lequel la première pluralité de grains (106) de matériau superabrasif (102) et la deuxième pluralité de grains (108) de matériau superabrasif (102) comprennent le même matériau superabrasif (102).

5. Comprimé polycristallin (100) selon la revendication 1, dans lequel la deuxième pluralité de grains (108) comprennent entre 2 % et 30 % en volume du matériau superabrasif polycristallin (102), de préférence dans lequel la deuxième pluralité de grains (108) comprennent entre 5 % et 15 % en volume du matériau superabrasif polycristallin (102).

6. Comprimé polycristallin (100) selon la revendication 1, comprenant en outre un matériau catalyseur (110) disposé dans au moins certains espaces interstitiels entre la première pluralité de grains (106) de matériau superabrasif (102) et la deuxième pluralité de grains (108) de matériau superabrasif (102) ; et/ou dans lequel le matériau superabrasif polycristallin (102) comprend du diamant polycristallin.

7. Comprimé polycristallin (100) selon la revendication 1, dans lequel la première pluralité et la deuxième pluralité de grains (106, 108) de matériau superabrasif (102) comprennent chacun un matériau choisi dans le groupe constitué de diamant et de nitrure de bore cubique, et dans lequel la première pluralité et la deuxième pluralité de grains (106, 108) comprennent chacun le même matériau superabrasif (102).

8. Outil de forage (54), comprenant :

un corps (56) ; et
au moins un comprimé polycristallin (100) fixé au corps (56), l'au moins un comprimé polycristallin (100) comprenant :
un matériau superabrasif polycristallin (102) comprenant :

une première pluralité de grains (106) de matériau superabrasif (102) ayant une première taille moyenne de grain entre 5 $\mu$m et 40 $\mu$m ; et
une deuxième pluralité de grains (108) de matériau superabrasif (102) ayant une deuxième taille moyenne de grain entre 5 nm et 1 $\mu$m et plus petite que la première taille moyenne de grain ;
dans lequel la première pluralité de grains (106) est non contiguë et est dispersée dans une matrice sensiblement continue de la deuxième pluralité de grains (108) ;
dans lequel la deuxième taille moyenne de grain est au moins cinquante fois plus petite que la première taille moyenne de grain.

9. Procédé de formation d'un comprimé polycristallin (100) selon la revendication 1, comprenant :

l'enrobage de grains relativement plus grands (106) de matériau superabrasif (102) avec des grains relativement plus petits (108) de matériau superabrasif (102) dans lequel les grains relativement plus grands (106) ont une première taille moyenne de grain entre 5 $\mu$m et 40 $\mu$m, et les grains relativement plus petits (108) ont une deuxième taille moyenne de grain entre 5 nm et 1 $\mu$m ;
la formation d'une structure verte comprenant les grains relativement plus grands (106) enrobés des grains relativement plus petits (108) ; et
le frittage de la structure verte, et dans lequel la deuxième taille moyenne est au moins cinquante fois plus petite que la première taille moyenne de grain.

10. Procédé selon la revendication 9, comprenant en outre le choix du matériau superabrasif (102) de chacun des grains relativement plus grands (106) et des grains relativement plus petits (108) pour comprendre du diamant et/ou comprenant en outre le mélange d'un matériau catalyseur (110) comprenant au moins l'un parmi le cobalt, le fer, et le nickel avec les grains relativement plus grands (106).

11. Procédé selon la revendication 9, dans lequel l'enrobage de grains relativement plus grands (106) de matériau superabrasif (102) avec des grains relativement plus petits (108) de matériau superabrasif (102) comprend l'électro-pulvérisation des grains relativement plus petits (108) de matériau superabrasif (102) sur les grains relativement plus grands (106) de matériau superabrasif (108) et/ou comprenant en outre le choix de chacun des grains relativement plus grands (106) de matériau dur (102) et des grains relativement plus petits (108) de matériau dur (102) pour comprendre un matériau choisi dans le groupe constitué de diamant, de nitrure de bore cubique, de nitrure de silicium, de carbure de silicium, de carbure de titane, de carbure de tungstène, et de carbure de tantale.

**FIG. 1**
**(PRIOR ART)**

**FIG. 2A**

**FIG. 2B**

**FIG. 2C**

120

108

106

108

106

**FIG. 3**

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008012781 A
- WO 2010092540 A
- US 20110031034 A1
- US 3745623 A
- US 5127923 A
- US 20010031034 A1
- US 4224380 A

**Non-patent literature cited in the description**

- **ERVIN E. UNDERWOOD.** Quantitative Stereology. Addison-Wesley Publishing Company, Inc, 1970, 103-105
- **N. ELLIS et al.** Development of a Continuous Nanoparticle Coating with Electrospraying. *2010 ECI Conference on the 13th Intl. Conference on Fluidization,* 2011, http://services.be-press.com/eci/fluidization_xiii/46